# EUROPEAN PATENT SPECIFICATION

(11) **EP 4 748 753 B1**
(45) Date of publication and mention of the grant of the patent: **14.10.2026**
(21) Application number: 25215360.6
(22) Date of filing: 12.11.2025
(51) Int. Cl.: B65G 21/06, B65G 21/16, B65G 21/20

(54) **MAGNETIC SUPPORT AND GUIDE STRUCTURE FOR ONE OR MORE CONVEYORS WITH ARTICULATED LINKS**
MAGNETISCHE STÜTZ- UND FÜHRUNGSSTRUKTUR FÜR EINEN ODER MEHRERE FÖRDERER MIT GELENKVERBINDUNGEN
SUPPORT MAGNÉTIQUE ET STRUCTURE DE GUIDAGE POUR UN OU PLUSIEURS CONVOYEURS À MAILLONS ARTICULÉS

(30) Priority: 22.11.2024 IT 202400026412
(43) Date of publication of application: 27.05.2026
(73) Proprietor: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Ottazzo, Marco Francesco Agostino

(56) References cited:
- EP-A1- 2 907 774
- EP-A1- 3 546 394
- EP-A1- 3 601 115

## Description

The present invention generally relates to a conveyor device with articulated links and, in particular, a magnetic support and guide structure for one or more conveyors with articulated links.

Even more specifically, the present invention relates to a rectilinear or curvilinear support structure for guiding one or more conveyors with articulated links, wherein each conveyor with articulated links can be at least partially made of a ferromagnetic material and wherein the support structure is provided with magnets configured for attracting the links of the conveyor towards their respective sliding surfaces. The support structure can constitute both the upper part, or forward path, and the lower part, or return path, of each conveyor with articulated links, which is therefore a closed-loop conveyor.

As is known, a conveyor with articulated links comprises a sequence of generally plate-like links, which extend in a direction substantially transversal to the moving direction of the conveyor. In the forward path of the conveyor, in a typical closed-loop configuration, these links form a support surface for the objects moved by the conveyor itself.

Considering the moving direction of the conveyor, each link is connected to a previous link and to a subsequent link by way of hinges usually located in the central part of each link. Consequently, the links form a continuous closed-loop conveyor, whose forward and return paths usually overlap.

The links can be made of either steel, like those described in the ISO 4348 Standard, or of plastic. Should the links be made of plastic, they are conveniently provided with pivot hinges made of a ferromagnetic material, so that they can interact with the magnets of the support and guide structure.

As a matter of fact, the use of a support structure provided with at least one sliding track is known to guide each closed-loop conveyor with articulated links. Each sliding track is provided with a pair of sliding surfaces which guide the sliding motion of the opposite transversal ends of the links of the conveyor in the respective forward path. These sliding surfaces can be placed either at a constant distance from each other or at different distances.

A recess, also referred to as channel, is present between the two sliding surfaces to allow to receive the articulation elements of the links of the conveyor. One or more guides are usually present on the surface opposite to that of the channel to route the links of the conveyor in their return path on their respective support structure.

Should it being necessary to guide a plurality of conveyors with articulated links, the support structure can be provided with a corresponding plurality of sliding tracks, that is to say one sliding track for each conveyor with articulated links. The support structure can also be provided with a plurality of return paths for the conveyors with articulated links. In this event, the number of the return paths equals the number of the sliding tracks of the forward paths and they are usually opposed, that is to say placed below, with respect to such sliding tracks.

In the case of links at least partially made of a ferromagnetic material, the support structure is provided with a plurality of magnets. These magnets are usually positioned below the level of the sliding plane, at the centre line axis of each channel. These magnets create a magnetic field which holds the links adherent to the sliding surfaces of the support structure. As a matter of fact, while the conveyor moves, the links would tend to raise from their respective sliding surface, thus jeopardizing the stability of the conveyed objects, if the attraction force exerted by the magnets were not there.

The guide tracks for conveyors with articulated links can have a rectilinear axis or a curvilinear axis. Curvilinear axis sliding tracks for conveyors with articulated links are disclosed, for example, in documents EP 2907774 A, EP 3546394 A and EP 3572358 A, all in the name of the same applicant.

In many cases, the support structure of the conveyors with articulated links consists of a plurality of separate components, usually made of a plastic material. A first component comprises at least one support plate. Other components consist of one or more guides, which form the sliding surfaces and delimit the channel inside which the links of each conveyor slide. Finally, a plurality of housing elements is normally provided, each containing one or more magnets. These housing elements fit in respective seats provided in the support plate.

The guides can be fixed to the support plate by means of male-female coupling means, therefore without screws and/or bolts, as disclosed for example in document EP 3587309 A. The housing elements for the magnets can also be fixed to the support plate by means of male-female coupling means, as disclosed for example in document EP 4122845 A in the name of the same applicant.

The guides are typically fixed to the upper surface of the support plate, that is to say the surface on which the channel inside which the links of each conveyor slide during its normal forward or transport journey is obtained. Conversely, the housing elements for the magnets can be fixed onto both the lower surface of the support plate and onto the upper surface of the support plate.

In the case where the housing elements for the magnets are fixed onto the upper surface of the support plate, typically along the channel, a plurality of discontinuities is formed on the surface of this channel, regardless of the fastening system of these housing elements. Although the housing elements for the magnets are always provided with suitable sealing systems, it cannot be ruled out that during conveyor operation, especially when transporting liquids or fluid substances in general, dirt residues can form at the discontinuities formed by the housing elements for the magnets. This could compromise the hygienic conditions of the entire support structure. Furthermore, in rare cases where the housing elements for the magnets are not properly attached to the upper surface of the support plate, these housing elements could also constitute obstacles that could compromise the smooth sliding of the respective conveyor with articulated links.

Document EP 3601115 A discloses a support and guide structure according to the preamble of claim 1. It discloses a magnetic support and guide structure wherein all the guides are integrally made in a single piece with a flat surface forming the base of the channels delimited by these guides. During assembly, the assembly consisting of all the guides and the flat surface integral with these guides overlaps the support plate and completely covers the magnets and their housing elements, if the latter are fixed to the upper surface of the support plate.

The assembly formed by the guides and the flat surface integral with these guides, as disclosed in the document EP 3601115 A, is however very bulky, especially in the event that the support structure is provided with numerous sliding tracks, each consisting of a pair of adjacent guides and the portion of flat surface between these two guides. Such a bulky assembly can cause difficulties both in assembly and in the possible disassembly of the support and guide structure.

In addition, the assembly consisting of the guides and the flat surface integral with these guides, as disclosed in document EP 3601115 A, is a monolithic assembly and must therefore be completely removed from the support plate if it becomes necessary to replace even a small part of the guides, for example due to excessive wear, and/or one or more of the magnets. In addition to the difficulties of assembly and disassembly, the need to replace the entire assembly if one or a few guides have wear problems and/or one or a few magnets need to be replaced also leads to an increase in the management costs of the support and guide structure.

The object of the present invention is, therefore, to provide a magnetic support and guide structure for one or more conveyors with articulated links which is capable of solving the aforementioned drawbacks of the prior art in an extremely simple, economical and particularly functional way.

In detail, it is an object of the present invention to provide a magnetic support and guide structure for one or more conveyors with articulated links which is capable of preventing any dirt from forming around the magnets when they are housed at the upper surface of the support plate.

Another object of the present invention is to provide a magnetic support and guide structure for one or more conveyors with articulated links which makes assembly and disassembly of the guides from the support plate easier than with the prior art, thus also simplifying maintenance operations on the various components of the support structure.

A further object of the present invention is to provide a magnetic support and guide structure for one or more conveyors with articulated links which is simple and economical in its manufacture and maintenance, since this support and guide structure comprises a lower number of components than the average number of components of the support and guide structures according to the prior art.

These objects according to the present invention will be achieved by providing a magnetic support and guide structure for one or more conveyors with articulated links as set forth in claim 1.

Further features of the invention are highlighted by the dependent claims, which are an integral part of the present description.

The features and advantages of a magnetic support and guide structure for one or more conveyors with articulated links according to the present invention will be clearer from the following exemplifying and hence non-limiting description, referring to the attached schematic drawings in which:
Figure 1 is an isometric top view of a preferred embodiment of the magnetic support and guide structure for one or more conveyors with articulated link according to the present invention;
Figure 2 is an enlarged view of the detail identified by II in Figure 1;
Figure 3 is an isometric top view of the support and guide structure of Figure 1, shown in a disassembled configuration;

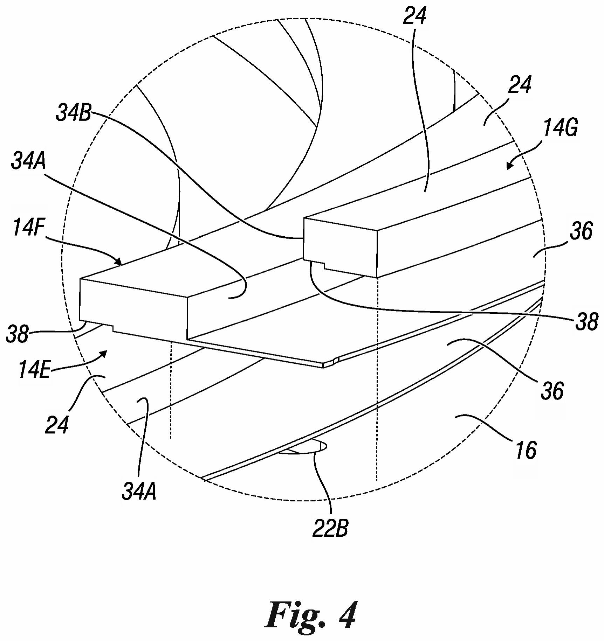

Figure 4 is an enlarged view of the detail identified by IV in Figure 3;

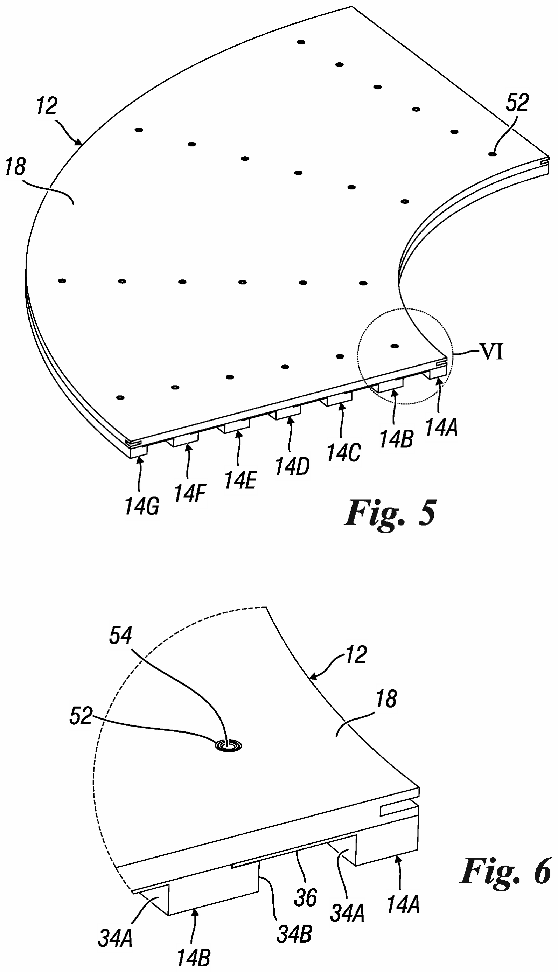

Figure 5 is an isometric bottom view of the support and guide structure of Figure 1 ;
Figure 6 is an enlarged view of the detail identified by VI in Figure 5;
Figure 7 is a side elevation view of the support and guide structure of Figure 1;
Figure 8 is another side elevation view of the support and guide structure of Figure 1, shown in a partially disassembled configuration;
Figure 9 is a bottom view of one of the components of the support and guide structure of Figure 1;
Figure 10 is an enlarged view of the detail identified by X in Figure 9;
Figure 11 is an isometric top view showing a assembly phase of the support and guide structure of figure 1;
Figures 12 and 13 show an embodiment of a magnetic component that can be used in the support and guide structure of Figure 1;
Figure 14 is an enlarged top view of the support and guide structure of figure 1, wherein the housings for the magnetic components of Figures 12 and 13 are shown;
Figure 15 is a sectional view obtained along line XV-XV of Figure 14;
Figure 16 is an enlarged view, in vertical section, of the support and guide structure of figure 1; and
Figure 17 is a further side elevation view of the support and guide structure of Figure 1, showing a disassembly phase of a single guide component.

With reference to the figures, a preferred embodiment of the magnetic support and guide structure for one or more conveyors with articulated link according to the present invention is shown. The support and guide structure is indicated as a whole with reference number 10. The support and guide structure 10 comprises, in a per se known manner, at least one plate-like support component 12, which extends on a respective horizontal plane P and comprises at least two surfaces opposite to each other, that is to say at least one first surface 16, which typically coincides with the upper surface of the support component 12, and at least one second surface 18, which typically coincides with the lower surface of the support component 12.

The support and guide structure 10 further comprises, in a per se known manner, at least two separate guides 14A, 14B, 14C, 14D, 14E, 14F, 14G arranged at a predefined distance D from each other. Each guide 14A, 14B, 14C, 14D, 14E, 14F, 14G is made of a polymeric material, is oriented according to a respective development axis X1, X2, X3, X4, X5, X6, X7 which is parallel to the plane P, has a predefined length, measured along the respective development axis X1, X2, X3, X4, X5, X6, X7, and forms a respective sliding surface 24 parallel to the plane P for a sliding path of each conveyor with articulated links (not shown).

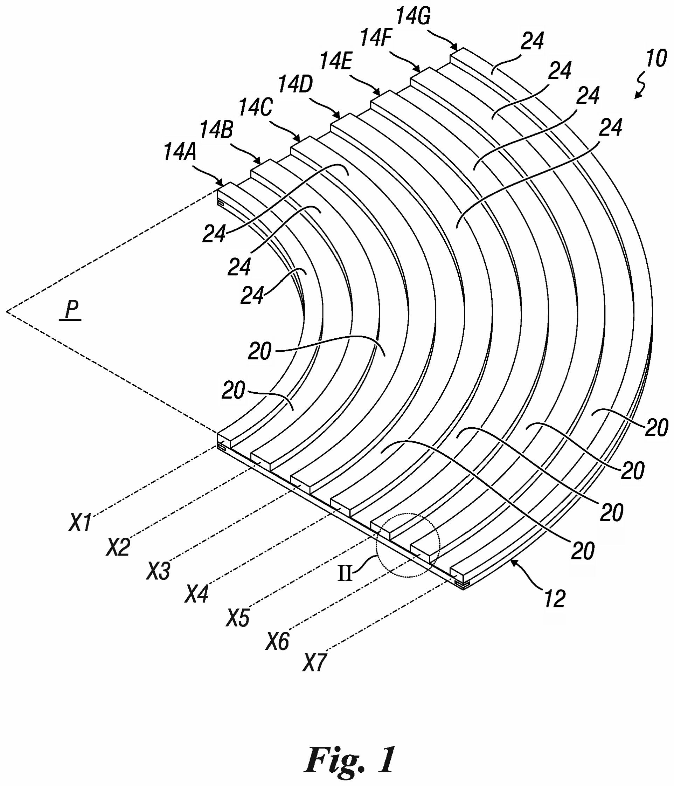

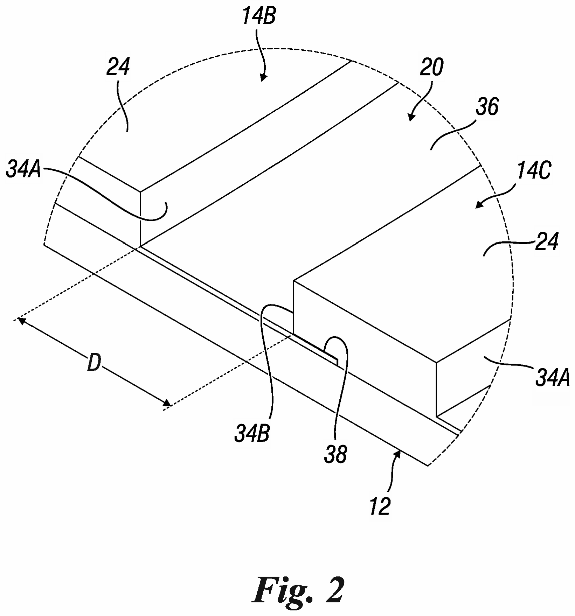

The guides 14A, 14B, 14C, 14D, 14E, 14F, 14G protrude from the first surface 16 of the support component 12 to define at least one sliding channel 20 parallel to said plane P and delimited by side surfaces 34A, 34B of contiguous pairs of guides, such as the guides 14A, 14B, the guides 14B, 14C, the guides 14C, 14D, the guides 14D, 14E, the guides 14E, 14F and the guides 14F, 14G (see Figures 1 and 2). Each sliding channel 20 allows at least one portion of the articulated links of the respective conveyor to be housed.

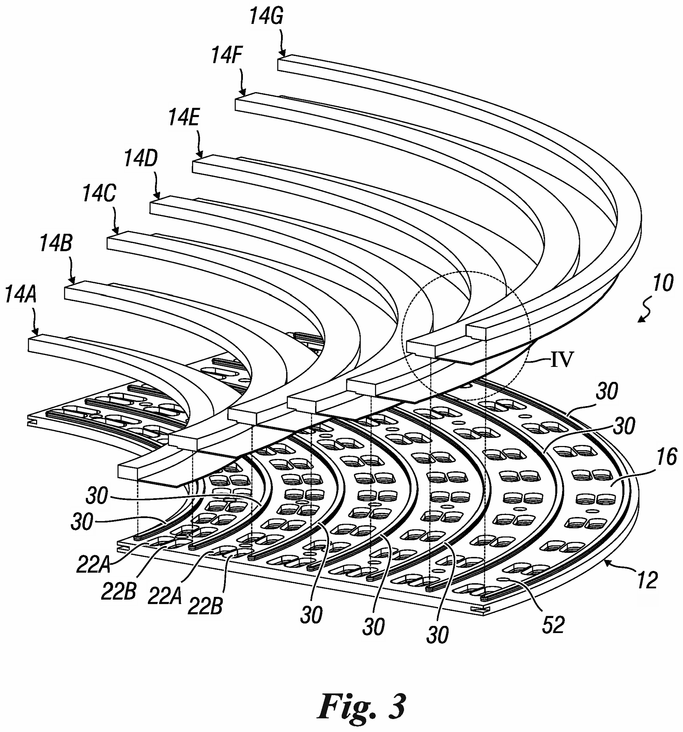

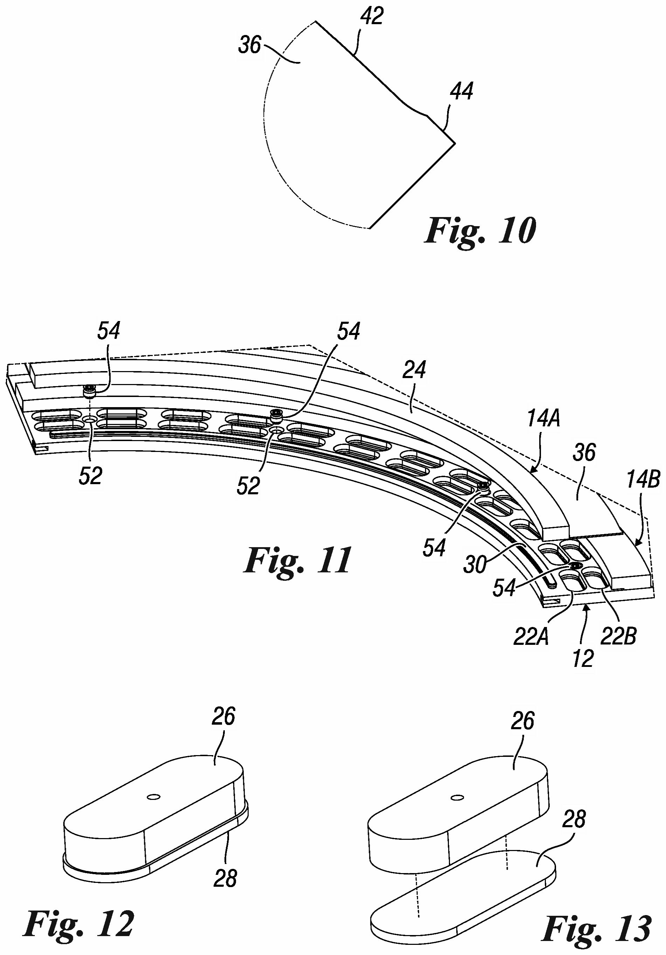

Since the conveyors with articulated links to be used on the support and guide structure 10 are least partially made of a ferromagnetic material, the support component 12 comprises a plurality of hollow seats 22A, 22B (see Figures 3 and 11) which are separated from each other. These hollow seats 22A, 22B are accessible from the first surface 16 of the support component 12, that is to say from the upper surface thereof, and each house at least one magnetic body consisting of a magnet 26 and a corresponding ferromagnetic plate 28 (see Figures 12 and 13). The support component 12 is preferably made of a polymeric material, as is each guide 14A, 14B, 14C, 14D, 14E, 14F, 14G. Again preferably, as shown in the various figures, the guides 14A, 14B, 14C, 14D, 14E, 14F, 14G are curvilinear guides, shaped according to a circular arc with a predefined radius. Consequently, the respective development axes X1, X2, X3, X4, X5, X6, X7 are also curvilinear axes.

In the embodiment shown in the figures, the guides 14A, 14B, 14C, 14D, 14E, 14F, 14G are seven in number and are therefore designed to delimit six sliding channels 20. The number of guides and sliding channels, as well as their length and (rectilinear or curvilinear) shape, can however vary according to technical requirements.

The support component 12 further comprises first coupling means 30, at the first surface 16 thereof, whereas each guide 14A, 14B, 14C, 14D, 14E, 14F, 14G comprises second coupling means 40, at a respective lower surface 32 thereof which is opposite to the sliding surface 24. The first coupling means 30 and the second coupling means 40 cooperate to removably connect each guide 14A, 14B, 14C, 14D, 14E, 14F, 14G to the support component 12 and to prevent relative movements of each guide 14A, 14B, 14C, 14D, 14E, 14F, 14G, with respect to the support component 12, along the respective development axis X1, X2, X3, X4, X5, X6, X7.

Preferably, as shown in the figures, the first coupling means 30 of the support component 12 are male or female coupling means, whereas the second coupling means 40 of each guide 14A, 14B, 14C, 14D, 14E, 14F, 14G are in turn female or male coupling means. The first coupling means 30 and the second coupling means 40 extend along the development axes X1, X2, X3, X4, X5, X6, X7, respectively. The first coupling means 30 are mated and capable of cooperating with the second coupling means 40 to create a snap-fit coupling without the use of screws and/or bolts, by pressing each guide 14A, 14B, 14C, 14D, 14E, 14F, 14G against the first surface 16 of the support component 12. More preferably, the first coupling means 30 consist of at least one protrusion, which forms the male coupling means and extends starting from the first surface 16 of the support component 12, whereas the second coupling means 40 consist of at least one cavity, which forms the female coupling means and extends within the lower surface 32 of a respective guide 14A, 14B, 14C, 14D, 14E, 14F, 14G.

According to the invention, at least one first group of guides, that is to say the guides 14A, 14B, 14C, 14D, 14E, 14F shown in the figures, is provided with at least one thin flat plate 36 or "palette", which is integrally formed in a single piece with the respective guide 14A, 14B, 14C, 14D, 14E, 14F and protrudes from a first side surface 34A of the respective guide 14A, 14B, 14C, 14D, 14E, 14F. This thin flat plate 36 or "palette", which is made of the same polymeric material as the guides 14A, 14B, 14C, 14D, 14E, 14F and preferably has a predefined average thickness of approximately 1.5 mm, extends along at least part of the length of the respective guide 14A, 14B, 14C, 14D, 14E, 14F, measured along the development axis X1, X2, X3, X4, X5, X6. The lower surface of each flat plate 36 is coplanar with the lower surface 32 of the respective guide 14A, 14B, 14C, 14D, 14E, 14F. The upper surface of each flat plate 36 instead forms the base of the sliding channel 20 for the articulated links of the respective conveyor.

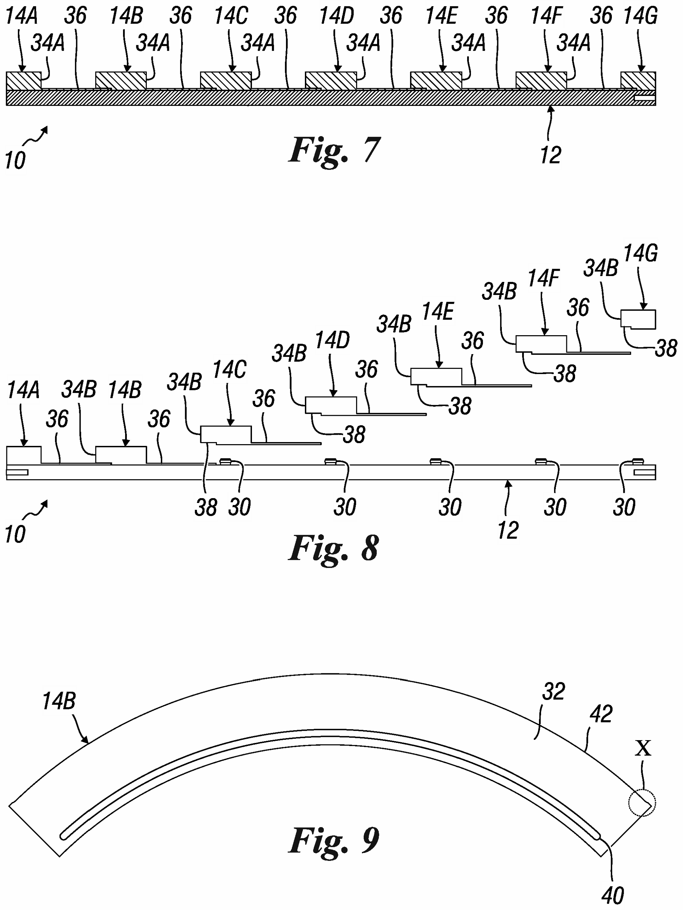

At least one second group of guides, that is to say the guides 14B, 14C, 14D, 14E, 14F, 14G shown in the figures, is provided with at least one notch-shaped recess 38, which is obtained at the lower surface 32 of the respective guide 14B, 14C, 14D, 14E, 14F, 14G. In particular, as shown for example in Figure 2, this notch-shaped recess 38 is obtained on a second side surface 34B of the respective guide 14C which is opposite to the first side surface 34A of an adjacent guide 14B on which the flat plate 36 is integrally formed. The notch-shaped recess 38 extends along at least part of the length of the respective guide 14B, 14C, 14D, 14E, 14F, 14G, measured along the development axis X1, X2, X3, X4, X5, X6, in such a way that a terminal edge 42 (shown in Figures 9 and 10) of the flat plate 36 of a given guide 14A, 14B, 14C, 14D, 14E, 14F at least partially fits, in a form-fitting manner, into a respective recess 38 of an adjacent guide 14A, 14B, 14C, 14D, 14E, 14F in the assembled configuration of the support and guide structure 10. In this assembled configuration of the support and guide structure 10, each flat plate 36 is arranged parallel to and in contact with the first surface 16 of the support component 12.

In the embodiment shown in the figures (see, in particular, Figures 1, 3, 7 and 8), which illustrates a support and guide structure 10 provided with a plurality of sliding channels 20, the first group of guides and the second group of guides form two intersecting assemblies, respectively. In fact, in this embodiment, it can be observed that all the guides of the support and guide structure 10, with the exception of the left side guide 14A and the right-side guide 14G, are provided with both the flat plate 36 or "palette" on one side and the recess 38 on the opposite side. On the left side guide 14A, however, only the flat plate 36 or "palette" is obtained, while on the right-side guide 14G, only the recess 38 is obtained.

In another possible embodiment of the support and guide structure 10, not shown in the figures, this support and guide structure 10 could be provided with only one sliding channel and, therefore, with only two guides placed on the sides of this sliding channel. In this possible embodiment, the first group of guides and the second group of guides would form two disjoint assemblies, respectively, since there would be a guide provided with only the flat plate or "palette", similar to the left side guide 14A shown in the figures, and the other guide provided with only the recess 38, similar to the right side guide 14G shown in the figures.

However, it cannot be ruled out that all the guides of the support and guide structure 10 are manufactured identically, for example for reasons of production standardisation. In this case, the first group of guides and the second group of guides would form two coincident assemblies, respectively.

Each flat plate 36 or "palette" allows to completely cover the hollow seats 22A, 22B inside which the magnets 26 and the corresponding ferromagnetic plates 28 are housed, preventing any dirt from accumulating in these hollow seats 22A, 22B. Furthermore, the presence of the flat plates 36 or "palettes" makes it superfluous to use of specific housing elements for the magnets, such as those disclosed in document EP 4122845 A, basically making the support and guide structure 10 simpler and cheaper to manufacture and maintain.

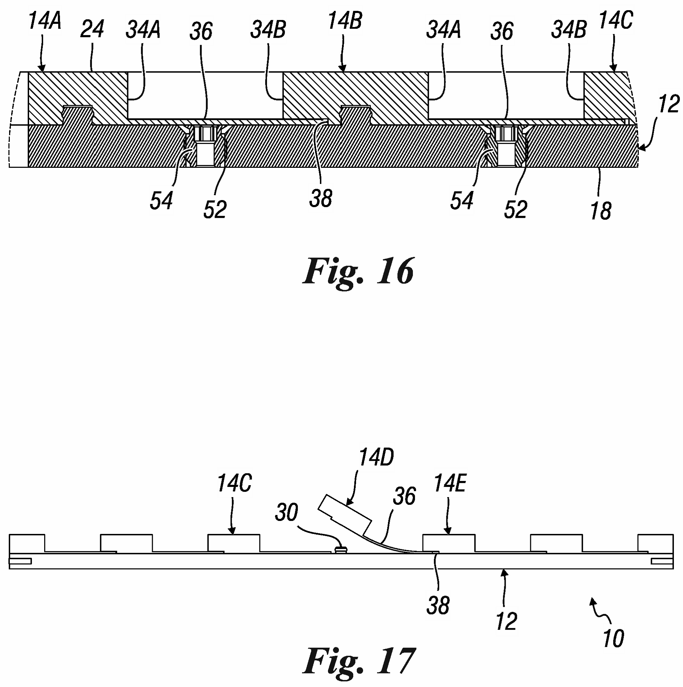

Advantageously, as shown in Figure 17, each flat plate 36 is flexible, so that the guide 14A, 14B, 14C, 14D, 14E, 14F on which said flat plate 36 is obtained can be either assembled on the support component 12, by bending such flat plate 36 and inserting the respective terminal edge 42 into the recess 38 of an adjacent guide 14B, 14C, 14D, 14E, 14F, 14G, or disassembled from the support component 12, again by bending said flat plate 36 and pulling the respective terminal edge 42 out of the recess 38 of the adjacent guide 14B, 14C, 14D, 14E, 14F, 14G. This flexibility characteristic of each flat plate 36 is schematically shown in Figure 17, where the guide involved in the assembly/disassembly operations is the one indicated with reference number 14D, whereas the adjacent guide is the guide 14E.

The presence of each flat plate 36 or "palette", which is integrally formed in a single piece with only one respective guide 14A, 14B, 14C, 14D, 14E, 14F and not with all the guides of the support and guide structure, as disclosed instead in document EP 3601115 A, allows the assembly/disassembly operations of a single guide 14D to be carried out while keeping not only the adjacent guide 14E, but also all the other guides mounted on the support component 12. Assembly/disassembly operations can also be carried out without the use of special tools, thanks to the snap-fit coupling means 30, 32.

Preferably, as shown in Figure 10, the terminal edge 42 of each flat plate 36 can be provided with at least one projecting portion 44, which is configured to abut against a respective recess 38 in the assembled configuration of the support and guide structure 10. This projecting portion 44, which can be conveniently obtained at an end edge of the respective flat plate 36, allows the remaining terminal edge 42 of the flat plate 36 to be maintained at a predefined distance from the bottom of the recess 38, thus facilitating the assembly of the various guides on the support and guide structure 10.

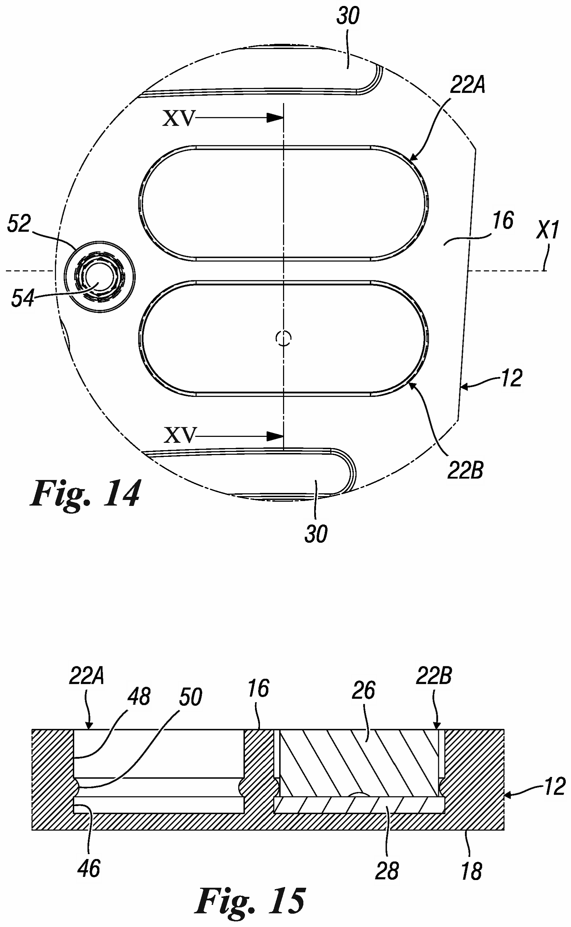

Again, preferably, in particular with reference to Figure 14, each hollow seat 22A, 22B for the magnetic bodies comprises a first cavity 22A and a second cavity 22B, which are obtained on the first surface 16 of the support component 12 and are delimited by contiguous pairs of guides 14A, 14B; 14B, 14C; 14C, 14D; 14D, 14E; 14E, 14F; 14F, 14G. The first cavity 22A and the second cavity 22B are placed side by side along a direction perpendicular to the development axis X1, X2, X3, X4, X5, X6, X7 of the respective contiguous pair of guides 14A, 14B; 14B, 14C; 14C, 14D; 14D, 14E; 14E, 14F; 14F, 14G. The first cavity 22A and the second cavity 22B house a first magnetic body, consisting of a magnet 26 and the corresponding ferromagnetic plate 28, and a second magnetic body, again consisting of a magnet 26 and the corresponding ferromagnetic plate 28, respectively. This arrangement of the two magnetic bodies side by side allows to define a positive pole and a negative pole, respectively, of the magnetic field generated by these magnetic bodies.

Preferably, each magnetic body consists of a magnet 26 and a corresponding ferromagnetic plate 28 which are glued together along respective horizontal surfaces, that is to say surfaces which are parallel to the plane P. As shown, for example, in Figures 12, 13 and 15, the horizontal surface of each ferromagnetic plate 28 can have a width which is larger than the horizontal surface of the respective magnet 26.

Consequently, as shown in Figure 15, each of the first cavity 22A and the second cavity 22B can comprise a base housing 46, which is designed to contain the ferromagnetic plate 28 of the respective magnetic body, and an insertion housing 48, which is open on said first surface 16 and is designed to contain the magnet 26 of the respective magnetic body. At least one perimeter rib 50 can be then obtained between the insertion housing 48 and the base housing 46, which protrudes towards the inside of the respective cavity 22A, 22B, so as to both allow the magnetic body to be snap-fit inserted into the respective cavity 22A, 22B, and to be hold in position, which thing is in any case also guaranteed by the presence of the flat plates 36.

As shown, for example in Figure 11, the support component 12 can be provided with a plurality of through holes 52, which extend between the first surface 16 and the second surface 18. Each through hole 52 is arranged for inserting therein a respective bushing 54. These bushings 54 are designed for fixing, for example by means of screws, each support component 12 on an underlying frame, which has the task of supporting an entire support and guide structure 10 normally formed by a plurality of support components 12 arranged in sequence on the same plane P.

As shown in Figure 16, preferably each through hole 52 is flared at the first surface 16 of the support component 12, so that each bushing 54 can be inserted in a respective through hole 52 only through said first surface 16, that is to say from top to bottom. This characteristic allows the bushings 54 never to fall down during the fastening operations of each support component 12 on the frame below. Each bushing 54 can also be externally threaded and have an external diameter which is greater than the average internal diameter of each through hole 52. In this way, each bushing 54 can be fixed inside the respective through hole 52 by screwing.

It has thus been seen that the magnetic support and guide structure for one or more conveyors with articulated links according to the present invention achieves the purposes previously highlighted.

## Claims

1. A support and guide structure (10) for one or more conveyors with articulated links, the support and guide structure (10) comprising:
- at least one plate-like support component (12), which extends on a respective horizontal plane (P) and comprises at least one first surface (16) and at least one second surface (18) opposite to each other;
- at least two separate guides (14A, 14B, 14C, 14D, 14E, 14F, 14G) arranged at a predefined distance (D) from each other, wherein each guide (14A, 14B, 14C, 14D, 14E, 14F, 14G) is made of a polymeric material, is oriented according to a respective development axis (X1, X2, X3, X4, X5, X6, X7) which is parallel to said plane (P), has a predefined length, measured along the respective development axis (X1, X2, X3, X4, X5, X6, X7), and forms a respective sliding surface (24) parallel to said plane (P) for a sliding path of each conveyor with articulated links;
- wherein said guides (14A, 14B, 14C, 14D, 14E, 14F, 14G) protrude from said first surface (16) of the support component (12) to define at least one sliding channel (20) parallel to said plane (P) and delimited by side surfaces (34A, 34B) of contiguous pairs of said guides (14A, 14B; 14B, 14C; 14C, 14D; 14D, 14E; 14E, 14F; 14F, 14G), each sliding channel (20) allowing at least one portion of the articulated links of the respective conveyor to be housed;
- wherein said support component (12) comprises a plurality of hollow seats (22A, 22B), which are separated from each other, are accessible from the first surface (16) of the support component (12) and each house at least one magnetic body consisting of a magnet (26) and a corresponding ferromagnetic plate (28);
- wherein said support component (12) comprises first coupling means (30), at said first surface (16), and wherein each guide (14A, 14B, 14C, 14D, 14E, 14F, 14G) comprises second coupling means (40), at a respective lower surface (32) of each guide (14A, 14B, 14C, 14D, 14E, 14F, 14G) which is opposite to said sliding surface (24); and
- wherein said first coupling means (30) and said second coupling means (40) cooperate to removably connect each guide (14A, 14B, 14C, 14D, 14E, 14F, 14G) to the support component (12) and to prevent relative movements of each guide (14A, 14B, 14C, 14D, 14E, 14F, 14G), with respect to said support component (12), along the respective development axis (X1, X2, X3, X4, X5, X6, X7),
the support and guide structure (10) being **characterized in that** at least one first group of guides comprises guides (14A, 14B, 14C, 14D, 14E, 14F, 14G) provided with at least one flat plate (36), which is integrally formed in a single piece with the respective guide (14A, 14B, 14C, 14D, 14E, 14F), which protrudes from a first side surface (34A) of the respective guide (14A, 14B, 14C, 14D, 14E, 14F) and extends along at least part of the length of the respective guide (14A, 14B, 14C, 14D, 14E, 14F), measured along said development axis (X1, X2, X3, X4, X5, X6), in such a way that the lower surface of each flat plate (36) is coplanar with the lower surface (32) of the respective guide (14A, 14B, 14C, 14D, 14E, 14F), and in such a way that the upper surface of each flat plate (36) forms the base of said sliding channel (20), **and in that** at least one second group of guides comprises guides (14B, 14C, 14D, 14E, 14F, 14G) provided with at least one notch-shaped recess (38), which is obtained at the lower surface (32) of the respective guide (14B, 14C, 14D, 14E, 14F, 14G) and on a second side surface (34B) of said respective guide (14B, 14C, 14D, 14E, 14F, 14G) which is opposite to the first side surface (34A) of an adjacent guide (14A, 14B, 14C, 14D, 14E, 14F) on which said flat plate (36) is integrally formed, wherein said notch-shaped recess (38) extends along at least part of the length of the respective guide (14B, 14C, 14D, 14E, 14F, 14G), measured along said development axis (X1, X2, X3, X4, X5, X6), in such a way that a terminal edge (42) of the flat plate (36) of a given guide (14A, 14B, 14C, 14D, 14E, 14F) at least partially fits, in a form-fitting manner, into a respective recess (38) of an adjacent guide (14A, 14B, 14C, 14D, 14E, 14F) in the assembled configuration of the support and guide structure (10), and in such a way that each flat plate (36), in the assembled configuration of the support and guide structure (10), is arranged parallel to and in contact with the first surface (16) of the support component (12), so as to completely cover said hollow seats (22A, 22B).

2. The support and guide structure (10) according to claim 1, **characterized in that** each flat plate (36) is flexible, so that the guide (14A, 14B, 14C, 14D, 14E, 14F) on which said flat plate (36) is obtained can be either assembled on the support component (12), by bending said flat plate (36) and inserting the respective terminal edge (42) into the recess (38) of an adjacent guide (14B, 14C, 14D, 14E, 14F, 14G), or disassembled from the support component (12), by bending said flat plate (36) and pulling the respective terminal edge (42) out of the recess (38) of said adjacent guide (14B, 14C, 14D, 14E, 14F, 14G), again keeping said adjacent guide (14B, 14C, 14D, 14E, 14F, 14G) assembled on the support component (12).

3. The support and guide structure (10) according to claim 1 or 2, **characterized in that** the terminal edge (42) of each flat plate (36) is provided with at least one projecting portion (44), which is configured to abut against said recess (38) in the assembled configuration of the support and guide structure (10).

4. The support and guide structure (10) according to any of claims 1 to 3, **characterized in that** each hollow seat (22A, 22B) comprises a first cavity (22A) and a second cavity (22B), which are obtained on the first surface (16) of the support component (12) and are delimited by contiguous pairs of guides (14A, 14B; 14B, 14C; 14C, 14D; 14D, 14E; 14E, 14F; 14F, 14G), wherein said first cavity (22A) and said second cavity (22B) are placed side by side along a direction perpendicular to the development axis (X1, X2, X3, X4, X5, X6, X7) of the respective contiguous pair of guides (14A, 14B; 14B, 14C; 14C, 14D; 14D, 14E; 14E, 14F; 14F, 14G), and wherein said first cavity (22A) and said second cavity (22B) house a first magnetic body, consisting of a magnet (26) and the corresponding ferromagnetic plate (28), and a second magnetic body, consisting of a magnet (26) and the corresponding ferromagnetic plate, respectively, so as to define a positive pole and a negative pole, respectively, of the magnetic field generated by said magnetic bodies.

5. The support and guide structure (10) according to claim 4, **characterized in that** each magnetic body consists of a magnet (26) and a corresponding ferromagnetic plate (28) which are glued together along respective horizontal surfaces, that is to say surfaces which are parallel to said plane (P), wherein the horizontal surface of said ferromagnetic plate (28) has a width which is larger than the horizontal surface of said magnet (26).

6. The support and guide structure (10) according to claim 5, **characterized in that** each of said first cavity (22A) and said second cavity (22B) comprises a base housing (46), which is designed to contain the ferromagnetic plate (28) of the respective magnetic body, and an insertion housing (48), which is open on said first surface (16) and is designed to contain the magnet (26) of the respective magnetic body, wherein at least one perimeter rib (50) is obtained between said insertion housing (48) and said base housing (46) and protrudes towards the inside of the respective cavity (22A; 22B), so as to allow the snap-fit insertion of said magnetic body into the respective cavity (22A; 22B).

7. The support and guide structure (10) according to any of claims 1 to 6, **characterized in that** said support component (12) is provided with a plurality of through holes (52), which extend between said first surface (16) and said second surface (18), wherein each through hole (52) is arranged for inserting therein a respective bushing (54), and wherein each through hole (52) is flared at said first surface (16), so that each bushing (54) can be inserted in a respective through hole (52) only through said first surface (16).

8. The support and guide structure (10) according to claim 7, **characterized in that** each bushing (54) is externally threaded and has an external diameter which is greater than the average internal diameter of each through hole (52), so that said bushing (54) can be fixed inside the respective through hole (52) by screwing.

9. The support and guide structure (10) according to any of claims 1 to 8, **characterized in that** said first coupling means (30) are male or female coupling means and said second coupling means (40) are female or male coupling means, wherein said first coupling means (30) and said second coupling means (40) extend along said development axes (X1, X2, X3, X4, X5, X6, X7), respectively, and wherein said first coupling means (30) are mated and capable of cooperating with said second coupling means (40) to create a snap-fit coupling, by pressing each guide (14A, 14B, 14C, 14D, 14E, 14F, 14G) against the first surface (16) of the support component (12).

10. The support and guide structure (10) according to claim 9, **characterized in that** said first coupling means (30) consist of at least one protrusion, which forms said male coupling means and extends starting from the first surface (16) of the support component (12), and said second coupling means (40) consist of at least one cavity, which forms said female coupling means and extends within the lower surface (32) of a respective guide (14A, 14B, 14C, 14D, 14E, 14F, 14G).

## Patentansprüche

1. Trag- und Führungsstruktur (10) für einen oder mehrere Förderer mit Gelenkgliedern, die Trag- und Führungsstruktur (10) umfassend:
- mindestens eine plattenartige Tragkomponente (12), die sich in einer jeweiligen horizontalen Ebene (P) erstreckt und mindestens eine erste Fläche (16) und mindestens eine zweite Fläche (18) einander gegenüber umfasst;
- mindestens zwei separate Führungen (14A, 14B, 14C, 14D, 14E, 14F, 14G), die in einem vordefinierten Abstand (D) voneinander angeordnet sind, wobei jede Führung (14A, 14B, 14C, 14D, 14E, 14F, 14G) aus einem Polymermaterial gefertigt ist, entlang gemäß einer jeweiligen Verlaufsachse (X1, X2, X3, X4, X5, X6, X7) ausgerichtet ist, die parallel zu der Ebene (P) ist, eine vordefinierte Länge aufweist, gemessen entlang der jeweiligen Verlaufsachse (X1, X2, X3, X4, X5, X6, X7), und eine jeweilige Gleitfläche (24) parallel zu der Ebene (P) für eine Gleitbahn jedes Förderers mit Gelenkgliedern bildet;
- wobei die Führungen (14A, 14B, 14C, 14D, 14E, 14F, 14G) aus der ersten Fläche (16) der Tragkomponente (12) hervorstehen, um mindestens einen Gleitkanal (20) parallel zu der Ebene (P) und begrenzt durch Seitenflächen (34A, 34B) aneinanderliegender Paare der Führungen (14A, 14B; 14B, 14C; 14C, 14D; 14D, 14E; 14E, 14F; 14F, 14G) zu bilden, wobei jeder Gleitkanal (20) ermöglicht, dass mindestens ein Abschnitts der Gelenkglieder des jeweiligen Förderers aufgenommen wird;
- wobei die Tragkomponente (12) eine Vielzahl von hohlen Sitze (22A, 22B) umfasst, die voneinander getrennt sind, von der ersten Fläche (16) der Tragkomponente (12) aus zugänglich sind und jeweils mindestens einen Magnetkörper aufnehmen, der aus einem Magneten (26) und einer entsprechenden ferromagnetischen Platte (28) besteht;
- wobei die Tragkomponente (12) an der ersten Fläche (16) erste Kupplungseinrichtungen (30) umfasst, und wobei jede Führung (14A, 14B, 14C, 14D, 14E, 14F, 14G) zweite Kupplungseinrichtungen (40) an einer jeweiligen Unterseite (32) jeder Führung (14A, 14B, 14C, 14D, 14E, 14F, 14G) gegenüber der Gleitfläche (24) umfasst; und
- wobei die ersten Kupplungseinrichtungen (30) und die zweiten Kupplungseinrichtungen (40) zusammenwirken, um jede Führung (14A, 14B, 14C, 14D, 14E, 14F, 14G) lösbar mit der Tragkomponente (12) zu verbinden und um relative Bewegungen jeder Führung (14A, 14B, 14C, 14D, 14E, 14F, 14G) in Bezug auf die Tragkomponente (12) entlang der jeweiligen Verlaufsachse (X1, X2, X3, X4, X5, X6, X7) zu verhindern,
wobei die Trag- und Führungsstruktur (10) **dadurch gekennzeichnet ist, dass** mindestens eine erste Gruppe von Führungen Führungen (14A, 14B, 14C, 14D, 14E, 14F, 14G) umfasst, die mit mindestens einer flachen Platte (36) versehen sind, die ganz in einem Stück mit der jeweiligen Führung (14A, 14B, 14C, 14D, 14E, 14F) gebildet ist, die aus einer ersten Seitenfläche (34A) der jeweiligen Führung (14A, 14B, 14C, 14D, 14E, 14F) hervorsteht und sich über mindestens einen Teil der Länge der jeweiligen Führung (14A, 14B, 14C, 14D, 14E, 14F) erstreckt, gemessen entlang der Verlaufssachse (X1, X2, X3, X4, X5, X6), auf eine Weise, dass die Unterseite jeder flachen Platte (36) koplanar mit der Unterseite (32) der jeweiligen Führung (14A, 14B, 14C, 14D, 14E, 14F) ist, und auf eine Weise, dass die Oberseite jeder flachen Platte (36) den Boden des Gleitkanals (20) bildet, und dass mindestens eine zweite Gruppe von Führungen Führungen (14B, 14C, 14D, 14E, 14F, 14G) umfasst, die mit mindestens einer kerbförmigen Aussparung (38) versehen sind, die an der Unterseite (32) der jeweiligen Führung (14B, 14C, 14D, 14E, 14F, 14G) und an einer zweiten Seitenfläche (34B) der jeweiligen Führung (14B, 14C, 14D, 14E, 14F, 14G), die gegenüber der ersten Seitenfläche (34A) einer angrenzenden Führung (14A, 14B, 14C, 14D, 14E, 14F) ist, an der die flache Platte (36) ganz gebildet ist, erlangt ist, wobei sich die kerbförmige Aussparung (38) entlang mindestens eines Teils der Länge der jeweiligen Führung (14B, 14C, 14D, 14E, 14F, 14G) erstreckt, gemessen entlang der Verlaufsachse (X1, X2, X3, X4, X5, X6), auf eine Weise, dass eine Abschlusskante (42) der flachen Platte (36) einer gegebenen Führung (14A, 14B, 14C, 14D, 14E, 14F) in der montierten Konfiguration der Trag- und Führungsstruktur (10) zumindest teilweise auf formschlüssige Weise in eine jeweilige Aussparung (38) einer angrenzenden Führung (14A, 14B, 14C, 14D, 14E, 14F) passt, und auf eine Weise, dass jede flache Platte (36) in der montierten Konfiguration der Trag- und Führungsstruktur (10) parallel zu der ersten Fläche (16) der Tragkomponente (12) und in Kontakt damit angeordnet ist, um die hohlen Sitze (22A, 22B) vollständig zu bedecken.

2. Trag- und Führungsstruktur (10) nach Anspruch 1, **dadurch gekennzeichnet, dass** jede flache Platte (36) flexibel ist, sodass die Führung (14A, 14B, 14C, 14D, 14E, 14F), auf der die flache Platte (36) erlangt ist, entweder an der Tragkomponente (12) montiert werden kann, indem die flache Platte (36) gebogen und die jeweilige Abschlusskante (42) in die Aussparung (38) einer angrenzenden Führung (14B, 14C, 14D, 14E, 14F, 14G) eingesetzt wird, oder von der Tragkomponente (12) abmontiert werden kann, indem die flache Platte (36) gebogen und die jeweilige Abschlusskante (42) aus der Aussparung (38) der angrenzenden Führung (14B, 14C, 14D, 14E, 14F, 14G) herausgezogen wird, wobei die angrenzende Führung (14B, 14C, 14D, 14E, 14F, 14G) weiterhin an der Tragkomponente (12) montiert bleibt.

3. Trag- und Führungsstruktur (10) nach einem der Ansprüche 1 bis 2, **dadurch gekennzeichnet, dass** die Abschlusskante (42) jeder flachen Platte (36) mit mindestens einem hervorstehenden Abschnitt (44) versehen ist, der konfiguriert ist, um in der montierten Konfiguration der Trag- und Führungsstruktur (10) an der Aussparung (38) anzuliegen.

4. Trag- und Führungsstruktur (10) nach einem der Ansprüche 1 bis 3, **dadurch gekennzeichnet, dass** jeder hohle Sitz (22A, 22B) einen ersten Hohlraum (22A) und einen zweiten Hohlraum (22B) umfasst, die an der ersten Fläche (16) der Tragkomponente (12) erlangt sind und durch aneinanderliegende Paare von Führungen (14A, 14B; 14B, 14C; 14C, 14D; 14D, 14E; 14E, 14F; 14F, 14G) begrenzt werden, wobei der erste Hohlraum (22A) und der zweite Hohlraum (22B) nebeneinander entlang einer Richtung senkrecht zu der Verlaufsachse (X1, X2, X3, X4, X5, X6, X7) des jeweiligen aneinanderliegenden Führungspaars (14A, 14B; 14B, 14C; 14C, 14D; 14D, 14E; 14E, 14F; 14F, 14G), platziert sind, und
wobei der erste Hohlraum (22A) und der zweite Hohlraum (22B) einen ersten Magnetkörper aufnehmen, jeweils bestehend aus einem Magneten (26) und der entsprechenden ferromagnetischen Platte (28), und einen zweiten Magnetkörper, bestehend aus einem Magneten (26) und der entsprechenden ferromagnetischen Platte, um jeweils einen positiven Pol und einen negativen Pol des von den Magnetkörpern erzeugten Magnetfelds zu definieren.

5. Trag- und Führungsstruktur (10) nach Anspruch 4, **dadurch gekennzeichnet, dass** jeder Magnetkörper aus einem Magneten (26) und einer entsprechenden ferromagnetischen Platte (28) besteht, die entlang jeweiliger horizontaler Flächen, soll heißen Flächen, die parallel zu der Ebene (P) sind, miteinander verklebt sind, wobei die horizontale Fläche der ferromagnetischen Platte (28) eine Breite aufweist, die größer ist als die horizontale Fläche des Magneten (26).

6. Trag- und Führungsstruktur (10) nach Anspruch 5, **dadurch gekennzeichnet, dass** jeder von dem ersten Hohlraum (22A) und dem zweiten Hohlraum (22B) ein Basisgehäuse (46), das zum Enthalten der ferromagnetischen Platte (28) des jeweiligen Magnetkörpers konstruiert ist, und ein Einsteckgehäuse (48), das an der ersten Fläche (16) offen und konstruiert ist, um den Magneten (26) des jeweiligen Magnetkörpers zu enthalten, umfasst, wobei zwischen dem Einsteckgehäuse (48) und dem Basisgehäuse (46) mindestens eine Umfangsrippe (50) erlangt ist, die in Richtung der Innenseite des jeweiligen Hohlraums (22A; 22B) hervorsteht, um das Einrasten des Magnetkörpers in den jeweiligen Hohlraum (22A; 22B) zu ermöglichen.

7. Trag- und Führungsstruktur (10) nach einem der Ansprüche 1 bis 6, **dadurch gekennzeichnet, dass** die Tragkomponente (12) mit einer Vielzahl von Durchgangslöchern (52) versehen ist, die sich zwischen der ersten Fläche (16) und der zweiten Fläche (18) erstrecken, wobei jedes Durchgangsloch (52) angeordnet ist, um darin eine jeweilige Hülse (54) einzusetzen, und wobei jedes Durchgangsloch (52) an der ersten Fläche (16) aufgeweitet ist, sodass jede Hülse (54) nur durch die erste Fläche (16) in das jeweilige Durchgangsloch (52) eingesetzt werden kann.

8. Trag- und Führungsstruktur (10) nach Anspruch 7, **dadurch gekennzeichnet, dass** jede Hülse (54) mit einem Außengewinde ist und einen Außendurchmesser aufweist, der größer ist als der durchschnittliche Innendurchmesser von jedem Durchgangsloch (52), sodass die Hülse (54) durch Einschrauben in dem jeweiligen Durchgangsloch (52) befestigt werden kann.

9. Trag- und Führungsstruktur (10) nach einem der Ansprüche 1 bis 8, **dadurch gekennzeichnet, dass** die ersten Kupplungseinrichtungen (30) Steck- oder Buchsen-Kupplungseinrichtungen sind und die zweiten Kupplungseinrichtungen (40) Buchsen- oder Steck-Kupplungseinrichtungen sind, wobei sich die ersten Kupplungseinrichtungen (30) und die zweiten Kupplungseinrichtungen (40) jeweils entlang der Verlaufsachsen (X1, X2, X3, X4, X5, X6, X7) erstrecken, und wobei die ersten Kupplungseinrichtungen (30) angepasst und in der Lage sind, mit den zweiten Kupplungseinrichtungen (40) zusammenzuwirken, um eine Einrastkupplung herzustellen, indem jede Führung (14A, 14B, 14C, 14D, 14E, 14F, 14G) gegen die erste Fläche (16) der Tragkomponente (12) gedrückt wird.

10. Trag- und Führungsstruktur (10) nach Anspruch 9, **dadurch gekennzeichnet, dass** die ersten Kupplungseinrichtungen (30) aus mindestens einem Vorsprung bestehen, der die Steckkupplungseinrichtung bildet und sich ausgehend von der ersten Fläche (16) der Tragkomponente (12) erstreckt, und die zweite Kupplungseinrichtung (40) aus mindestens einem Hohlraum besteht, der die Steck-Kupplungseinrichtung bildet und sich innerhalb der Unterseite (32) einer jeweiligen Führung (14A, 14B, 14C, 14D, 14E, 14F, 14G) erstreckt.

## Revendications

1. Structure de support et de guidage (10) destinée à un ou plusieurs convoyeurs à maillons articulés, ladite structure de support et de guidage (10) comprenant :
- au moins un élément de support (12) en forme de plaque, qui s'étend dans un plan horizontal respectif (P) et qui comporte au moins une première surface (16) et au moins une deuxième surface (18) situées l'une en face de l'autre ;
- au moins deux guides (14A, 14B, 14C, 14D, 14E, 14F, 14G) distincts disposés à une distance prédéfinie (D) les uns des autres, chaque guide (14A, 14B, 14C, 14D, 14E, 14F, 14G) est constitué d'un matériau polymère, est orienté selon un axe de développement respectif (X1, X2, X3, X4, X5, X6, X7) qui est parallèle audit plan (P), présente une longueur prédéfinie, mesurée le long de l'axe de développement respectif (X1, X2, X3, X4, X5, X6, X7), et forme une surface coulissante (24) respective parallèle audit plan (P) pour un trajet de coulissement de chaque convoyeur à maillons articulés ;
- dans laquelle lesdits guides (14A, 14B, 14C, 14D, 14E, 14F, 14G) font saillie à partir de ladite première surface (16) de l'élément de support (12) pour définir au moins un canal coulissant (20) parallèle audit plan (P) et délimité par des surfaces latérales (34A, 34B) de paires contiguës desdits guides (14A, 14B ; 14B, 14C ; 14C, 14D ; 14D, 14E ; 14E, 14F ; 14F, 14G), chaque canal coulissant (20) permettant de loger au moins une partie des maillons articulés du convoyeur correspondant ;
- dans laquelle ledit élément de support (12) comprend une pluralité de logements creux (22A, 22B), qui sont séparés les uns des autres, sont accessibles depuis la première surface (16) de l'élément de support (12) et abritent chacun au moins un corps magnétique constitué d'un aimant (26) et d'une plaque ferromagnétique (28) correspondante ;
- dans laquelle ledit élément de support (12) comprend un premier moyen de couplage (30), au niveau de ladite première surface (16), et dans laquelle chaque guide (14A, 14B, 14C, 14D, 14E, 14F, 14G) comprend un deuxième moyen de couplage (40), au niveau d'une surface inférieure (32) respective de chaque guide (14A, 14B, 14C, 14D, 14E, 14F, 14G) qui est opposée à ladite surface coulissante (24) ; et
- dans laquelle ledit premier moyen de couplage (30) et ledit deuxième moyen de couplage (40) coopèrent pour relier de manière amovible chaque guide (14A, 14B, 14C, 14D, 14E, 14F, 14G) à l'élément de support (12) et d'empêcher les mouvements relatifs de chaque guide (14A, 14B, 14C, 14D, 14E, 14F, 14G) par rapport audit élément de support (12), le long des axes de développement respectifs (X1, X2, X3, X4, X5, X6, X7),
la structure de support et de guidage (10) étant **caractérisée en ce qu'**au moins un premier groupe de guides comprend des guides (14A, 14B, 14C, 14D, 14E, 14F, 14G) munis d'au moins une plaque plate (36), qui est formée d'un seul tenant avec le guide (14A, 14B, 14C, 14D, 14E, 14F) respectif, qui fait saillie depuis une première surface latérale (34A) du guide (14A, 14B, 14C, 14D, 14E, 14F) respectif et s'étend sur au moins une partie de la longueur du guide (14A, 14B, 14C, 14D, 14E, 14F) respectif, mesurée le long dudit axe de développement (X1, X2, X3, X4, X5, X6), de telle sorte que la surface inférieure de chaque plaque plate (36) soit coplanaire avec la surface inférieure (32) du guide (14A, 14B, 14C, 14D, 14E, 14F) respectif, et de telle sorte que la surface supérieure de chaque plaque plate (36) forme la base dudit canal coulissant (20), et **en ce qu'**au moins un deuxième groupe de guides comprend des guides (14B, 14C, 14D, 14E, 14F, 14G) pourvus d'au moins un évidement en forme d'encoche (38), qui est réalisé sur la surface inférieure (32) du guide (14B, 14G, 14D, 14E, 14F, 14G) respectif et sur une deuxième surface latérale (34B) dudit guide (14B, 14C, 14D, 14E, 14F, 14G) respectif qui est opposée à la première surface latérale (34A) d'un guide (14A, 14B, 14C, 14D, 14E, 14F) adjacent sur laquelle ladite plaque plate (36) est formée d'un seul tenant, dans lequel ledit évidement en forme d'encoche (38) s'étend sur au moins une partie de la longueur du guide (14B, 14C, 14D, 14E, 14F, 14G) respectif, mesurée le long dudit axe de développement (X1, X2, X3, X4, X5, X6), de telle sorte qu'un bord d'extrémité (42) de la plaque plate (36) d'un guide (14A, 14B, 14C, 14D, 14E, 14F) donné s'emboîte au moins partiellement, par complémentarité de forme, dans un évidement (38) respectif d'un guide (14A, 14B, 14C, 14D, 14E, 14F) adjacent dans la configuration assemblée de la structure de support et de guidage (10), et de telle sorte que chaque plaque plate (36), dans la configuration assemblée de la structure de support et de guidage (10), soit disposée parallèlement à la première surface (16) de l'élément de support (12) et en contact avec celle-ci, de manière à recouvrir entièrement lesdits logements creux (22A, 22B).

2. Structure de support et de guidage (10) selon la revendication 1, **caractérisée en ce que** chaque plaque plate (36) est flexible, de sorte que le guide (14A, 14B, 14C, 14D, 14E, 14F) sur laquelle est formée ladite plaque plate (36) puisse être soit assemblée sur l'élément de support (12), en pliant ladite plaque plate (36) et en insérant le bord d'extrémité (42) correspondant dans l'évidement (38) d'un guide (14B, 14C, 14D, 14E, 14F, 14G) adjacent, soit démontée de l'élément de support (12), en pliant ladite plaque plate (36) et en retirant le bord d'extrémité (42) correspondant de l'évidement (38) dudit guide (14B, 14C, 14D, 14E, 14F, 14G) adjacent, tout en maintenant ledit guide (14B, 14C, 14D, 14E, 14F, 14G) adjacent assemblé sur l'élément de support (12).

3. Structure de support et de guidage (10) selon la revendication 1 ou 2, **caractérisée en ce que** le bord d'extrémité (42) de chaque plaque plate (36) est muni d'au moins une partie en saillie (44), qui est configurée pour venir en butée contre ledit évidement (38) dans la configuration assemblée de la structure de support et de guidage (10).

4. Structure de support et de guidage (10) selon l'une quelconque des revendications 1 à 3, **caractérisée en ce que** chaque logement creux (22A, 22B) comprend une première cavité (22A) et une deuxième cavité (22B), qui sont formées sur la première surface (16) de l'élément de support (12) et sont délimitées par des paires contiguës de guides (14A, 14B ; 14B, 14C ; 14C, 14D ; 14D, 14E ; 14E, 14F ; 14F, 14G), dans lequel ladite première cavité (22A) et ladite deuxième cavité (22B) sont disposées côte à côte selon une direction perpendiculaire à l'axe de développement (X1, X2, X3, X4, X5, X6, X7) de la paire contiguë respective de guides (14A, 14B ; 14B, 14C ; 14C, 14D ; 14D, 14E ; 14E, 14F ; 14F, 14G), et dans lequel ladite première cavité (22A) et ladite deuxième cavité (22B) abritent un premier corps magnétique, constitué d'un aimant (26) et de la plaque ferromagnétique (28) correspondante, et d'un deuxième corps magnétique, constitué respectivement d'un aimant (26) et de la plaque ferromagnétique correspondante, de manière à définir respectivement un pôle positif et un pôle négatif du champ magnétique généré par lesdits corps magnétiques.

5. Structure de support et de guidage (10) selon la revendication 4, **caractérisée en ce que** chaque corps magnétique est constitué d'un aimant (26) et d'une plaque ferromagnétique (28) correspondante qui sont collés l'un à l'autre le long de surfaces horizontales respectives, c'est-à-dire de surfaces parallèles audit plan (P), la surface horizontale de ladite plaque ferromagnétique (28) ayant une largeur supérieure à celle de la surface horizontale dudit aimant (26).

6. Structure de support et de guidage (10) selon la revendication 5, **caractérisée en ce que** chacune desdites première cavité (22A) et deuxième cavité (22B) comprend un logement de base (46), conçu pour recevoir la plaque ferromagnétique (28) du corps magnétique correspondant, et un logement d'insertion (48), qui est ouvert sur ladite première surface (16) et est conçu pour recevoir l'aimant (26) du corps magnétique correspondant, dans laquelle au moins une nervure périphérique (50) est formée entre ledit logement d'insertion (48) et ledit logement de base (46) et fait saillie vers l'intérieur de la cavité (22A ; 22B) correspondante, de manière à permettre l'insertion par encliquetage dudit corps magnétique dans la cavité (22A ; 22B) correspondante.

7. Structure de support et de guidage (10) selon l'une quelconque des revendications 1 à 6, **caractérisée en ce que** ledit élément de support (12) est muni d'une pluralité de trous débouchants (52) qui s'étendent entre ladite première surface (16) et ladite deuxième surface (18), chaque trou débouchant (52) étant agencé pour y insérer une douille (54) respective, et dans laquelle chaque trou débouchant (52) est évasé au niveau de ladite première surface (16), de sorte que chaque douille (54) ne puisse être insérée dans un trou débouchant (52) correspondant qu'à travers ladite première surface (16).

8. Structure de support et de guidage (10) selon la revendication 7, **caractérisée en ce que** chaque douille (54) est filetée à l'extérieur et présente un diamètre extérieur supérieur au diamètre intérieur moyen de chaque trou débouchant (52), de sorte que ladite douille (54) puisse être fixée à l'intérieur du trou débouchant (52) correspondant par vissage.

9. Structure de support et de guidage (10) selon l'une quelconque des revendications 1 à 8, **caractérisée en ce que** lesdits premiers moyens de couplage (30) sont des moyens de couplage mâles ou femelles et lesdits deuxièmes moyens de couplage (40) sont des moyens de couplage femelles ou mâles, dans laquelle lesdits premiers moyens de couplage (30) et lesdits deuxièmes moyens de couplage (40) s'étendent respectivement le long desdits axes de développement (X1, X2, X3, X4, X5, X6, X7), respectivement, et dans laquelle lesdits premiers moyens de couplage (30) sont adaptés et aptes à coopérer avec lesdits deuxièmes moyens de couplage (40) pour créer un couplage par encliquetage, en appuyant chaque guide (14A, 14B, 14C, 14D, 14E, 14F, 14G) contre la première surface (16) de l'élément de support (12).

10. Structure de support et de guidage (10) selon la revendication 9, **caractérisée en ce que** lesdits premiers moyens de couplage (30) sont constitués d'au moins une saillie, qui forme lesdits moyens de couplage mâles et s'étend à partir de la première surface (16) de l'élément de support (12), et ledit deuxième moyen de couplage (40) est constitué d'au moins une cavité, qui forme ledit moyen de couplage femelle et s'étend à l'intérieur de la surface inférieure (32) d'un guide (14A, 14B, 14C, 14D, 14E, 14F, 14G) respectif.
